# EUROPEAN PATENT SPECIFICATION

(11) **EP 2 523 401 B1**
(45) Date of publication and mention of the grant of the patent: **05.07.2017**
(21) Application number: 11165466.1
(22) Date of filing: 10.05.2011
(51) Int. Cl.: H04L 12/26, H04L 12/413, H04L 12/707, H04L 12/703, H04L 12/46, H04L 12/437

(54) **Virtual networks within a physical network**
Virtuelles Netzwerk innerhalb eines physischen Netzwerks
Réseaux virtuels dans un réseau physique

(43) Date of publication of application: 14.11.2012
(73) Proprietor: Airbus Defence and Space Oy, 00380 Helsinki (FI)
(72) Inventor: Kemppainen, Jouni, 00380 Helsinki (FI); Lahtinen, Olli-Pekka, 00380 Helsinki (FI); Väisänen, Mika, 00380 Helsinki (FI)
(74) Representative: Kolster Oy Ab

(56) References cited:
- WO-A1-00/13376
- WO-A1-2007/040417
- US-A1- 2002 196 735
- US-A1- 2009 274 044
- US-B1- 6 751 746

## Description

### FIELD

The invention relates to the field of telecommunications and, particularly, to virtual networks in packet-switched communications systems.

### BACKGROUND

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

With the evolvement of communications technologies and different services using packet-switched technology, the importance of reliable and continuous communications for some services has consistently increased. One reason is that real-time traffic, such as voice, is very sensitive on link failures and/or different delays caused by transmitting real-time traffic over a packet network, using Internet Protocol (IP) or Ethernet, for example.

Networks utilizing IP or Ethernet allow use of variable sized packets and rerouting of packets in case a link fails. A solution providing fault tolerance against a link failure is based on connecting network nodes into a ring, also called a loop, wherein one of the transmission links (a link is between two nodes) is turned to idle so that there is no transmission loop, and in case of a link failure, the idle link is turned to active. Depending on implementation, this is achieved by using a spanning tree protocol implemented by Ethernet level 2 or other corresponding data link layer switches (also called bridges), or by using a link state routing protocol implemented by IP level 3 or other corresponding network layer routers. The spanning tree protocol creates a spanning tree within a mesh network of connected layer 2 switches and disables those links that are not part of the spanning tree, leaving a single active path between any two networks. The disabled links are backup paths that are activated during a convergence, if an active link fails. A link state routing protocol, implemented in each router, collects link state information on each other router, detects changes in a network topology, such as link failures, and converges on a new loop-free routing structure within seconds.

However, in any case, when an active link fails, convergence takes some time, and some packets may be lost or the connection delay may increase causing the received real-time data to jitter. This is especially problematic in telecommunications relating to public safety: losing part of an address, for example, may be fatal.

An alternative solution for convergence is disclosed in FR 2791839. It discloses a solution for ATM (asynchronous transfer mode) terminals, in which a sending ATM terminal duplicates an ATM packet (cell) and then uses two different parallel virtual circuits over which the packets containing the same data content are sent to the receiving ATM terminal, which then removes one of the packets. ATM differs from other packet-switched networks technologies by using a connection-oriented model (resembling circuit-switched technology), in which a virtual circuit is established between two endpoints before the actual data exchange may begin. Hence the parallel virtual circuits are established each time a connection is established. Further, since the parallel virtual circuits are established to provide fault tolerance, there are two separate physical network end-to-end connections. Implementing this kind of a solution to other packet-switched networks increases costs, network node loads, increase the time it takes to establish a communication, and creates a problem how to ensure that there actually are two different end-to-end connections between the sender and the receiver.

US 2009/0274044 discloses a solution in which an equal number of virtual chain networks are defined as there are physical links between network nodes in a physical ring network. In US 2009/0274044, packets are transmitted using one of the virtual networks and the others are backup networks, one of which is selected, in response to detecting a link failure in the virtual network currently in use, to be used instead of the virtual network currently in use. The selected backup network is the one which does not comprise a link in which the link failure was detected.

WO 00/13376 discloses two different alternatives how to implement a redundant packet data communication system. In the first way, a first end-to-end path through a network and a second end-to-end path through a network for a redundant data transmission are established, so that a data packet comprising a first label and actual data is sent from the sending node to the receiving node over the first path and another data packet comprising a second label and a copy of the actual data is sent over the second path. The paths are different so that they pass via different network nodes. Non-redundant data may be sent over one of the paths, or a new path may be established for the non-redundant data. The second way is to use two unidirectional ring networks in which the network nodes are connected to their neighbors in the ring with two unidirectional physical links. The redundant data is sent using both networks, the non-redundant data using one of the networks. WO 00/13376 discloses also different ways to monitor link failure.

### SUMMARY

An object of the present invention is to provide seamless and uninterrupted communication even when an active link fails. The object is achieved by a method, a system and a network node as defined in the independent claims. Further embodiments of the invention are disclosed in the dependent claims.

According to an aspect, at least two independent virtual chain net-works are configured semi-statically within a physical ring network so that network nodes of the physical ring belong to both virtual chain networks, the chain networks having one end in the same node, the other end in different nodes.

An advantage is that the chain virtual networks within one physical network provides redundancy without requiring a further physical network and in which no convergence is need in case of a link failure.

### BRIEF DESCRIPTION OF THE DRAWINGS

In the following different embodiments will be described in greater detail with reference to the attached drawings, in which
Figure 1 shows simplified architecture of a system and schematic diagrams of apparatuses according to an embodiment;
Figure 2 illustrates an example of packet flows in virtual networks;
Figure 3 is a flow chart illustrating an exemplary embodiment; and
Figure 4 is a simplified block diagram of an apparatus according to an embodiment.

### DETAILED DESCRIPTION OF SOME EMBODIMENTS

Exemplary embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Embodiments of present invention are applicable to any base station, relay, router, switch, gateway, corresponding components, corresponding apparatuses, and/or to any communication system or any combination of different communication systems supporting virtual networks within a physical network or physical networks. The communication system may be a wireless communication system or a communication system utilizing both fixed networks and wireless networks. The protocols used and the specifications of communication systems, and apparatuses, especially in wireless communication, develop rapidly. Such development may require extra changes to an embodiment. Therefore, all words and expressions should be interpreted broadly and are intended to illustrate, not to restrict, the embodiment.

In the following, a link means a connection between two network nodes.

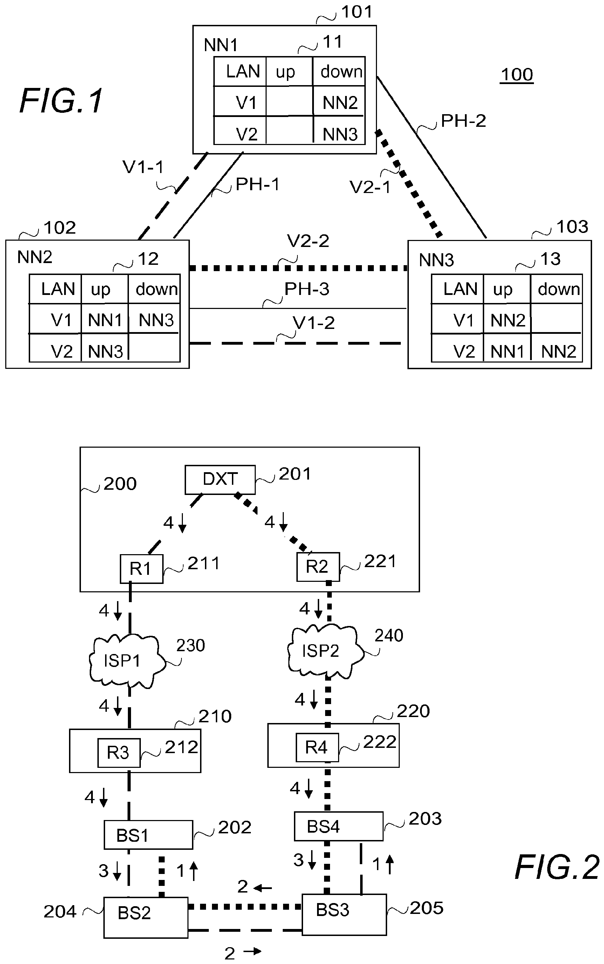

A general architecture of a system 100 according to an embodiment is illustrated in Figure 1. Figure 1 is a simplified architecture only showing a minimum number of network nodes required for implementation of the embodiment, and no user equipments or connections to other networks. It is apparent to a person skilled in the art that a system and a network comprises in practise many network nodes (number of which may be even or odd) and the network nodes may be for different purposes, like a base station or a switch or a gateway. Depending on implementation, the network nodes may support multihoming, i.e. are configured to receive and/or send over two or more active communication links.

In the embodiment illustrated in Figure 1, the network nodes 101,102, and 103 are connected to each other by means of physical links PH-1, PH-2, PH-3, and the thus formed physical network is a ring network, i.e. a network in which the nodes are connected to a closed loop. The physical links may be fixed (wired) or wireless links and the network may comprise both types of links.

Within the physical network, the nodes are connected by two virtual separate chain networks V1 and V2, each virtual chain network connecting, in the illustrated example all network nodes by virtual links, a first virtual network by links V1-1 and V1-2, and a second virtual network by links V2-1 and V2-2, a chain having two end points and not forming a closed loop. A chain network is also called a line network. In the illustrated example, the chain in the first virtual network is NN1-NN3-NN2 and in the second virtual network NN1-NN2-NN3. Hence, the virtual networks in the example have opposed transmission directions for a packet (as can be seen from Figure 2). The virtual networks illustrated in Figure 1 are bidirectional in the sense that they can be used both for receiving and sending traffic but unidirectional in the sense that for traffic entering the virtual network in a specific network node they can be used only in one direction. In the illustrated example, if NN1, for example, sends a packet to NN2, the virtual network V1 (and more precisely, link V1-1) is used for the transmission to NN2, and the virtual network V2 is used for the transmission to NN3 and from NN3 to NN2.The physical network is illustrated by a solid line between network nodes, the virtual networks by a dotted line (the first virtual network) and a dashed line (the second virtual network).

In the example, the virtual chain networks are semi-statically 11, 12, 13 configured to the nodes by means of a next hop address, the next hop address depending on whether a transmission is an uplink transmission towards the network node in which both virtual chain network ends, or downlink transmission towards the network node that is the other end of the chain network. In the example, in the network node in which both virtual chain networks ends, i.e. NN1, there is next hop addresses only for downlink and in the other end network nodes of the chain, there is no next hop address for a corresponding downlink transmission. NN1 may be a switch and NN2 and NN3 may be base stations. Herein, semi-statically means that the configurations are static in nature but the configurations may be updated if a need arise, for example, in response to a network node being added to the physical ring network or removed from the physical network.

For example, if NN2 receives from a user terminal, or generates itself one unit of traffic such as a packet, which is targeted to NN1 (including forwarding the traffic from the network 100 to another network, not illustrated in Figure 1, connected via NN1 to the network 100), NN2 copies the packet and sends the packet to NN1 over link V1-1 and substantially simultaneously sends a copy of the packet to NN3 over link V2-2, i.e. uses the uplink next hop addresses of both networks. Because NN3 received the copy of the packet over V2-2, i.e. over virtual network 2, NN3 forwards the copy to NN1 over link V2-1. Thus, NN1 received both the packet and the copy of the packet. Should the link V1-1 fail, NN1 would receive the copy, and vice versa, if link V2-2 or link V2-1 fails, NN1 would in any case receive the packet. Thus, by means of the at least two virtual networks delivering the same traffic, seamless and uninterrupted packet delivery is provided for unacknowledged real-time data in packets in an asynchronous packet delivery.

An advantage provided by two independent networks within one physical network is that the maintenance and building of one physical network is easier and cheaper than building two physical networks.

An advantage of the semi-statically configured virtual networks and the redundancy provided by duplicate packets is that the network nodes, and the physical links, may be of different type and/or non-homogenous, whereas in the prior art virtual network solutions the network nodes need to be similar and connected by links of the same type, i.e. either homogenous switches implementing spanning tree protocol, or homogenous routers using a link state routing protocol, otherwise the convergence will fail.

A further advantage provided by the semi-statically configured two virtual chain networks is that there is no need to check by test traffic whether or not there is a need to trigger convergence (i.e. there is no need to use the spanning tree protocol or the routing protocol to determine whether or not there is a link failure). Thus, there is no need to reserve resources for the test traffic, and processing the test information.

A further advantage, in addition to having only one physical network, compared to the solution in FR 2791839, is that since the virtual chain networks are semi-statically configured, they are not established communication-specifically, and thereby time needed for connection establishment is minimized and network processing resources are not needed for determining the paths.

In the illustrated example, the network nodes 101, 102, and 103 may be network nodes of any system, and belong to a radio access network or to a core network or be a gateway node between the radio access network and the core network. For example, the system may be a Trans European Trunked Radio or Terrestrial Trunked Radio TETRA system, and one of the network nodes a Digital Exchange DXT in a Switching and Management Infrastructure SwMI, the other network nodes being base stations controlled by SwMI, and the virtual networks being virtual local area networks. TETRA is a digital Private Mobile Radio or Professional Mobile Radio PMR type private network, typically a company or official network, wherein all channels are used by one or more companies or official organizations. However, as stated earlier, the system may be any other system providing a telecommunications network, a local area network, an ad hoc network, a metropolitan area network, a wide area network, a virtual private network, etc., like an Ethernet network, Internet Protocol (IP) network, wireless local area network, Wi-Fi, WiMax, mobile WiMax, Flash Orthogonal frequency-division multiplexing (OFDM) network, any 3GGP network, such as GSM2+, UMTS (universal mobile telecommunication system), and future developments of mobile communications network (such as LTE Advanced and other 4^{th} generation networks).

Although the network nodes have been depicted in Figure 1 as one entity, they may be implemented in one or more physical or logical entities. Their units and functions may be software and/or software-hardware and/or firmware components (recorded indelibly on a medium such as read-only-memory or embodied in hard-wired computer circuitry).

Although in the illustrated example one of the endpoints in both virtual networks is a common endpoint, i.e. NN1, to which both of the networks end, and the other endpoints of the virtual networks are different (i.e. NN3 to the first virtual network, and NN2 to the second virtual network), it may be that the virtual networks do not have a common endpoint. For example, a physical network having six nodes may be configured to have following chains NN1-NN2-NN3-NN4-NN5-NN6 and NN2-NN1-NN6-NN5-NN4-NN3. The advantage of having a common endpoint (i.e. the latter chain in the previous example would be NN1-NN6-NN5-NN4-NN3-NN2) is that with a common endpoint all nodes are reached if there is a physical link failure regardless of where the link failure is. For example, if the physical link between NN1 and NN2 fails, when there is a common endpoint, a packet sent from NN2 will be received by all nodes, including NN1. However, if there is no common endpoint and NN1 and NN2 are endpoints of different virtual networks, NN1 will not receive a packet sent from NN2 if there is a link failure between NN1 and NN2. In other words, having a common end point provides within only one physical network the same redundancy as if there were two physical networks.

In another example, based on the example illustrated in Figure 1, the common endpoint NN1 may be configured to check, whether the packet it received from NN2 over V1 is targeted to another network node in the same network 100, i.e. to NN3, the other network node not being the network node wherefrom the packet was received. If the outcome of the check is positive, NN1 in the example is configured to forward the packet over V2 to NN3.

Figure 2 illustrates another example of a TETRA network implementing the two semi-statically configured virtual networks. In the example, both virtual networks comprise all network nodes terminating and/or generating traffic in the network but not all of relaying entities/network nodes. Examples of the network nodes terminating and/or generating traffic include switches, media gateways, and base stations. Examples of the relaying entities include routers, relays and any network node in a network merely forwarding the traffic. In Figure 2, the physical network is not illustrated, one of the virtual networks is illustrated by a dotted line (chain DXT-R1-ISP1-R3-BS1-BS2-BS3-BS4) and one by a dashed line (chain DXT-R2-ISP2-R4-BS4-BS3-BS2-BS1). As can be seen, the dashed line virtual network comprises relaying entities between the common endpoint and the other end point of the dotted virtual network, and vice versa. It should be appreciated that both virtual network comprises relaying entities between intermediate network nodes (no such relaying entities is illustrated in Figure 2). Further, it should be appreciated that the other end point of a virtual network may be extended to a relaying entity, for example the dotted virtual network may be extended from BS1 to R3.

In the illustrated example, the DXT 201 site 200 comprises two routers 211, 221 that are independent on each other, the routers 211, 221 being connected to corresponding routers 212, 222 on corresponding concentration sites 210, 220 over corresponding IP networks 230, 240 which may be networks of the same network connection provider (ISP), or of different network connection providers. The IP networks comprise relaying entities for the network comprising the physical ring network and the two virtual chain networks. Thanks to the two virtual chain networks, there is no need to have redundant router pairs on the DXT site 200, the concentration sites 210, 220 are not connected to each other, and there is no IP routing between IP networks 230, 240, and between concentration sites 210, 220. A router 212, 222 in the concentration site is connected via a virtual network to a base station 202, 203, the base stations 202, 203, 204, 205 having two virtual networks between them.

In the example of Figure 2, a packet and a corresponding copy is sent to each TETRA base station (BS) from DXT. Therefore, DXT sends 4 packets over a virtual network, and 4 copies of the packets over the other virtual network, and an arrow associated with a number illustrates the packet flow direction and amount of forwarded packets. As can be seen in Figure 2, if there is no failure, each base station receives a packet and a copy of the packet.

It should be appreciated that the use of the virtual networks enables in addition to the birectional traffic, also unidirectional traffic, in the very rare cases in which unidirectional traffic is to be used, by means of semi-statically configuring only downlink next-hop addresses.

Although in the above, two virtual chain networks are configured, it should be appreciated that it is possible to configure three or more virtual chain networks in a similar way.

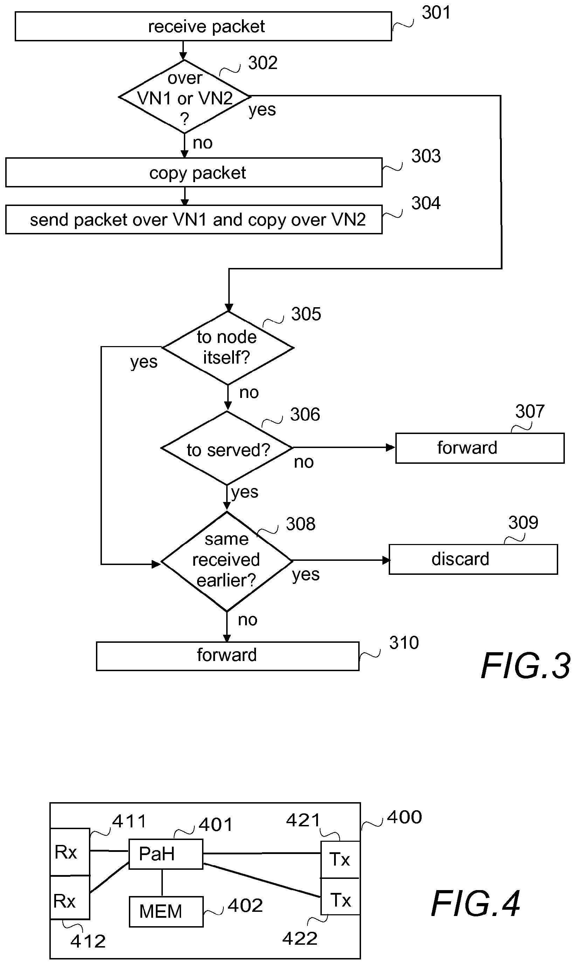

Figure 3 is a flow chart illustrating functionality of a network node according to an exemplary embodiment in which the network node comprises semi-statically configured virtual TETRA networks having DXT as a common endpoint, the other nodes being base stations. Further, in the exemplary embodiment, it has been assumed that the virtual networks are transparent to user equipments and to network nodes to which DXT is connected to outside the physical network forming the ring within which the virtual networks are defined.

When a network node receives a packet (step 301), it determines, in step 302, whether or not it was received over one of the virtual networks VN1 or VN2. If not, the packet is received from a user equipment if the network node is a base station, or from another part of the system if the network node is a DXT, and the network node copies, in step 303, the packet and sends, in step 304, the packet over a first virtual network and the copy of the packet over the second virtual network according to the semi-static configuration.

If the packet is received over one of the virtual networks, the network node checks, whether or not the packet is targeted to the network node itself or to an apparatus served by the network node (steps 305 and 306). If not, the network node forwards, in step 307, the packet to the next node according to the semi-static configuration of the virtual network over which the packet was received.

If the packet is targeted to the network node itself or to an apparatus served by the network node, the network node checks, in step 308, whether or not the same packet has been received earlier over the other virtual network. If yes, the network node discards, in step 309, the packet.

If the packet has not been received earlier over the other virtual network, the network node forwards, in step 310, the packet towards its destination. The destination may be within the network node itself, like a controller receiving signaling information, or the server apparatus. The apparatus served by the network node may be a user equipment, when the network node is a base station. When the network node is DXT, the apparatus served by the network node may be another network node belonging to another part of the system.

In a further embodiment, the network node is configured to proceed according to steps 308-310 only when the packet is targeted to the network node itself, other packets are forwarded, also to apparatuses served by the network, without performing duplicate checking (step 308).

It should be appreciated that if the packet is targeted to the network node itself, it reorders the packets if necessary. Depending on an implementation, the network node may or may not be configured to reorder also other packets, for example, packets to apparatuses served by the network node.

In an embodiment, the network node contains information whether or not apparatuses served by the network node supports multihoming. In the embodiment, the network node is further configured to check, when the packet is targeted to an apparatus served by the network node (i.e. after step 306, when the answer is yes), whether the apparatus to which the packet is targeted supports multihoming, and if the apparatus supports multihoming, simply forward the packet (step 310).If the apparatus does not support multihoming, the network node is configured to perform steps 308 to 310.

The functions and steps described above with Figure 3 are in no absolute chronological order, and some of the steps or functions may be performed simultaneously or in an order differing from the given one. Other functions can also be executed between the steps or functions or within the steps. Some of the functions or the steps or part of the steps can also be left out or replaced by a corresponding function or step or part of the step. Further, functions and/or steps described with different embodiments may be combined to obtain further embodiments.

Figure 4 is a simplified block diagram of a network node, or a corresponding apparatus configured to act as a network node, that may be used in the embodiments illustrated herein. The network node 400 is a computing device configured to perform one or more of network node functionalities described with an embodiment, and it may be configured to perform functionalities from different embodiments. For this purpose, the network node may comprises a packet handling unit (PaH) 401 for providing at least forwarding a received packet according to one example described above. The packet handling unit 401 may be further configured to perform one or more of the copying, checking, discarding, and reordering. The packet handling unit 401 may be a separate unit or integrated to another unit in the network node.

A network node, or a corresponding apparatus implementing functionality or some functionality according to an embodiment may generally include a processor (not shown in Figure 4), controller, control unit, microcontroller, or the like connected to a memory and to various interfaces of the apparatus. Generally the processor is a central processing unit, but the processor may be an additional operation processor. The packet handling unit 401 may be configured as a computer or a processor, or a microprocessor, such as a single-chip computer element, or as a chipset, including at least a memory for providing storage area used for arithmetic operation and an operation processor for executing the arithmetic operation. The packet handling unit 401, may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions of one or more embodiments. In other words, the packet handling unit 401 may be an element that comprises one or more arithmetic logic units, a number of special registers and control circuits.

Further, the network node may comprise other units, and it comprises different interface units, such as receiving units 411, 412 for receiving different inputs, control information packets, user data packets and messages, for example, and sending units 421, 422 for sending different outputs, control information packets, user data packets and messages, for example. The receiving units and the transmitting units each provides an interface in an apparatus, the interface including a transmitter and/or a receiver or a corresponding means for receiving and/or transmitting information, and performing necessary functions so that user data, content, control information, signalling and/or messages can be received and/or transmitted. The receiving and sending units may comprise a set of antennas, the number of which is not limited to any particular number.

The network node, or a corresponding apparatus, such as the user equipment and the base station, may generally include volatile and/or nonvolatile memory 402 that may be configured to store the semi-static configurations of virtual networks, such as the next hop addresses. Further, the memory may be configured to maintain information on received packets at least as long as is needed to for determining whether a packet has been received earlier and/or information on capabilities of apparatuses served by the network node. The memory may also store computer program code such as software applications (for example, for the packet handling unit) or operating systems, information, data, content, or the like for the processor to perform steps associated with operation of the apparatus in accordance with embodiments. The memory may be, for example, EEPROM, ROM, PROM, RAM, DRAM, SRAM, firmware, programmable logic, a hard drive, or other fixed data memory or storage device etc and typically store content, data, or the like. Further, the memory, or part of it, may be removable memory detachably connected to the apparatus.

The different units may be connected to the packet handling unit 401, as is shown in Figure 4.

It should be appreciated that the apparatus may comprise other units used in or for information transmission. However, they are irrelevant to the actual invention and, therefore, they need not to be discussed in more detail here.

It will be obvious to a person skilled in the art that, as the technology advances, the inventive concept can be implemented in various ways. The invention and its embodiments are not limited to the examples described above but may vary within the scope of the claims.

## Claims

1. A method for a system (100) comprising at least three network nodes (101, 102, 102) connected to each other by means of physical links (PH-1, PH-2, PH-3) forming a physical ring network, the method comprising:
configuring a first virtual network connecting the same at least three network nodes of the physical ring network in the form of a chain (V1-1, V1-2) having two endpoints so that configuration of the first virtual network is static in nature but the configuration may be updated if a need arise, by storing to a network node that is an end point of the first virtual network an uplink next hop address or a downlink next hop address, and to each other network node between the end points a next hop address for uplink and a next hop address for downlink towards the network node the chain ends; and
configuring a second virtual network connecting the same at least three network nodes of the physical ring that the first virtual network is connecting in the form of a chain (V2-1, V2-2) having two endpoints at least one of which is not common with the endpoints of the first virtual network so that configuration of the second virtual network is static in nature but the configuration may be updated if a need arise, by storing to a network node that is an end point of the second virtual network an uplink next hop address or a downlink next hop address, and to each other network node between the end points a next hop address for uplink and a next hop address for downlink towards the network node the chain ends; **characterized by**
using the first virtual network and the second virtual network for transmitting correspondingly and substantially simultaneously a packet and a copy of the packet; the method further comprising:
receiving (301), in a network node, a packet over one of the first virtual network and the second virtual network;
checking (305, 306), whether the packet is targeted to the network node itself or to an apparatus served by the network node; and
if not, forwarding (307) the packet according to the configuration of the corresponding virtual network.

2. A method as claimed in claim 1, further comprising configuring the first virtual network and the second virtual network to have one common end-point (101).

3. A method as claimed in claim 1 or 2, the method further comprising:
receiving (301) data to be sent in a packet over an interface other than an interface for the first or the second virtual network;
copying (303) the packet;
sending (304) the packet over the first virtual network; and
sending (304) the copy of the packet over the second virtual network.

4. A method as claimed in claim 1 or 2, the method further comprising, when a packet is received over one of the first virtual network and the second network and targeted to the apparatus:
checking (308)whether or not the same packet have been received earlier over the other one of the first virtual network and the second virtual network; and
if the same packet has been received earlier, discarding (309) the received packet; otherwise forwarding (310) the packet to the apparatus.

5. A system (100) comprising
at least three network nodes (101, 102, 103) connected to each other by means of a physical ring network comprising physical links;
a first virtual network comprising the same at least three different network (101, 102, 103) nodes of the physical ring network connected in the first virtual network in a form of a first chain having two end points; and
a second virtual network comprising the same at least three different network (101, 102, 103) nodes of the physical ring that the first virtual network comprises, the same at least three different network nodes being connected in a form of a second chain, the second chain having two end points, at least one of the two end points not being common with the end points of the first chain;
wherein the virtual networks are configured (11, 12, 13) to the network nodes so that configurations are static in nature but the configurations may be updated if a need arise, by storing to a network node that is an end point of the first virtual network an uplink next hop address or a downlink next hop address, and to each other network node between the end points of the first virtual network node a next hop address for uplink and a next hop address for downlink towards the network node the chain of the first virtual network ends and by storing to a network node that is an end point of the second virtual network an uplink next hop address or a downlink next hop address, and to each other network node between the end points of the second virtual network node a next hop address for uplink and a next hop address for downlink towards the network node the chain of the second virtual network ends;
**characterized in that** the
the system (100) is configured to use the first virtual network for transmission of a packet and the second virtual network for transmission a copy of the packet, and the network nodes (101, 102, 103) are configured to, in response to receiving in a network node a packet over one of the first virtual network and the second virtual network, check, whether the packet is targeted to the network node itself or to an apparatus served by the network node, and if not, forward (307) the packet according to the configuration of the corresponding virtual network.

6. A system (100) as claimed in claim 5, wherein the virtual networks have one common end point (101).

7. A system as claimed in claim 6, wherein
the system further comprises one or more relaying entities (220) at least between the common end point (201) and the other end point (202) of the second virtual network (202), and
the virtual networks are configured so that the first virtual network does not comprise one or more of the one or more relaying entities (220) between the common end point (201) and the other end point (202) of the second virtual network.

8. A system (100) as claimed in claim 5, 6 or 7, wherein the virtual networks are bidirectional.

9. A system (100) as claimed in claim 5, 6, 7 or 8, wherein exactly one first virtual network and one second virtual network are configured, both virtual networks comprising the at least three network nodes (101, 102, 103)

10. A system (100) as claimed in claim 5, 6, 7, 8 or 9, wherein one or more of the network nodes (101, 102, 103) comprises means for receiving data to be sent in a packet over an interface other than an interface for the first or the second virtual network, means for copying the packet, means for sending the packet over the first virtual network, and means for sending the copy of the packet over the second virtual network; and /or means for performing a method according to claim 1, 2, 3 or 4.

11. A network node (400) comprising:
memory (402) having at least a first virtual network and a second virtual network configured to the memory so that configurations of the virtual networks are static in nature but the configurations may be updated if a need arise, the first virtual network and the second virtual network comprising the same at least three different network nodes a physical ring network, within which the virtual networks are, comprises, the network nodes being connected in a virtual network in a form of a chain having two end points, wherein at least one of the two end points of the second virtual network is not common with the end points of the first virtual network, wherein, if the network node is an end point of the first virtual network, the configuration comprises an uplink next hop address or a downlink next hop address, or if the network node is between the end points of the first virtual network, a next hop address for uplink and a next hop address for downlink towards the network node the chain of the first virtual network ends and if the network node is an end point of the second virtual network, the configuration comprises an uplink next hop address or a downlink next hop address, or if the network node is between the end points of the second virtual network, a next hop address for uplink and a next hop address for downlink towards the network node the chain of the second virtual network ends;
**characterized in that** the network node (400) further comprises
means for using the first virtual network and the second virtual network for transmitting correspondingly and substantially simultaneously a packet and a copy of the packet;
means (401) for receiving a packet over one of the first virtual network and the second virtual network and a copy of the packet over the other one of the first virtual network and the second virtual network;
means for checking (401), whether the packet or the copy is targeted to the network node itself or to an apparatus served by the network node, and
means (401) for forwarding the packet and the copy according to the corresponding configuration if the packet or the copy is not targeted to the network node itself or to an apparatus served by the network.

12. A network node (400) as claimed in claim 11, further comprising:
means (401) for forwarding a packet targeted to an apparatus served by the network node to the apparatus.

13. A network node (400) as claimed in claim 11 or 12, further comprising:
means (401) for receiving data to be sent in a packet over an interface other than an interface for the first or the second virtual network;
means (401) for copying the packet;
means (421) for sending the packet over the first virtual network; and
means (422) for sending the copy of the packet over the second virtual network.

14. A network node (400) as claimed in claim 11, 12 or 13, further comprising:
means (401) for checking, in response to a packet received over one of the first virtual network and the second network and targeted to another network node or apparatus served by the network node, whether or not a copy of the packet have been received earlier over the other one of the first virtual network and the second virtual network; and
means for discarding the received packet in response to the copy being received earlier.

15. A network node (400) as claimed in claim 11, 12, 13 or 14, wherein the network node (400) is a base station, a switch, a digital exchange or a media gateway controller.

## Patentansprüche

1. Verfahren für ein System (100), umfassend mindestens drei Netzwerkknoten (101, 102, 102), die mithilfe von physischen Verbindungen (PH-1, PH-2, PH-3) miteinander verbunden sind und ein physisches Ringnetzwerk bilden, wobei das Verfahren umfasst:
Konfigurieren eines ersten virtuellen Netzwerks, welches dieselben mindestens drei Netzwerkknoten des physischen Ringnetzwerks in Form einer Kette (V1-1, V1-2) mit zwei Endpunkten verbindet, so dass die Konfiguration des ersten virtuellen Netzwerks statischer Natur ist, die Konfiguration jedoch aktualisiert werden kann, wenn der Bedarf entsteht, indem in einem Netzwerkknoten, bei welchem es sich um einen Endpunkt des ersten virtuellen Netzwerks handelt, eine nächste Uplink-Abschnittsadresse oder eine nächste Downlink-Abschnittsadresse gespeichert wird, und in jedem anderen Netzwerkknoten zwischen den Endpunkten eine nächste Abschnittsadresse für den Uplink und eine nächste Abschnittsadresse für den Downlink in Richtung des Netzwerkknotens gespeichert wird, an dem die Kette endet;
Konfigurieren eines zweiten virtuellen Netzwerks, welches dieselben mindestens drei Netzwerkknoten des physischen Rings verbindet, den das erste virtuelle Netzwerk in Form einer Kette (V2-1, V2-2) mit zwei Endpunkten verbindet, von welchen mindestens einer nicht gleich den Endpunkten des ersten virtuellen Netzwerks ist, so dass die Konfiguration des zweiten virtuellen Netzwerks statischer Natur ist, die Konfiguration jedoch aktualisiert werden kann, wenn der Bedarf entsteht, indem in einem Netzwerkknoten, bei welchem es sich um einen Endpunkt des zweiten virtuellen Netzwerks handelt, eine nächste Uplink-Abschnittsadresse oder eine nächste Downlink-Abschnittsadresse gespeichert wird, und in jedem anderen Netzwerkknoten zwischen den Endpunkten eine nächste Abschnittsadresse für den Uplink und eine nächste Abschnittsadresse für den Downlink in Richtung des Netzwerkknotens gespeichert wird, an dem die Kette endet; **gekennzeichnet durch**
Verwenden des ersten virtuellen Netzwerks und des zweiten virtuellen Netzwerks zur entsprechenden und im Wesentlichen gleichzeitigen Übertragung eines Pakets und einer Kopie des Pakets; wobei das Verfahren des Weiteren umfasst:
Empfangen (301), in einem Netzwerkknoten, eines Pakets über eines aus dem ersten virtuellen Netzwerk und dem zweiten virtuellen Netzwerk;
Überprüfen (305, 306), ob das Paket an den Netzwerkknoten selbst oder an eine Vorrichtung gerichtet ist, die von dem Netzwerkknoten versorgt wird; und
wenn nicht, Weiterleiten (307) des Pakets entsprechend der Konfiguration des entsprechenden virtuellen Netzwerks.

2. Verfahren nach Anspruch 1, des Weiteren umfassend das Konfigurieren des ersten virtuellen Netzwerks und des zweiten virtuellen Netzwerks, so dass sie einen gemeinsamen Endpunkt (101) aufweisen.

3. Verfahren nach Anspruch 1 oder 2, wobei das Verfahren des Weiteren umfasst:
Empfangen (301) von Daten, die in einem Paket über eine andere Schnittstelle als eine Schnittstelle für das erste oder das zweite virtuelle Netzwerk zu senden sind;
Kopieren (303) des Pakets;
Senden (304) des Pakets über das erste virtuelle Netzwerk; und
Senden (304) der Kopie des Pakets über das zweite virtuelle Netzwerk.

4. Verfahren nach Anspruch 1 oder 2, wobei das Verfahren des Weiteren umfasst, wenn ein Paket über eines aus dem ersten virtuellen Netzwerk und dem zweiten virtuellen Netzwerk empfangen wird und an die Vorrichtung gerichtet ist:
Überprüfen (308), ob dasselbe Paket bereits früher über das eine aus dem ersten virtuellen Netzwerk und dem zweiten virtuellen Netzwerk empfangen wurde oder nicht; und
wenn das Paket bereits früher empfangen wurde, Entsorgen (309) des empfangenen Pakets; andernfalls Weiterleiten (310) des Pakets an die Vorrichtung.

5. System (100), umfassend:
mindestens drei Netzwerkknoten (101, 102, 103), die miteinander mithilfe eines physischen Ringnetzwerks verbunden sind, das physische Verbindungen umfasst;
ein erstes virtuelles Netzwerk, umfassend dieselben mindestens drei verschiedenen Netzwerkknoten (101, 102, 103) des physischen Ringnetzwerks, die in dem ersten virtuellen Netzwerk in einer Form einer ersten Kette mit zwei Endpunkten verbunden sind; und
ein zweites virtuelles Netzwerk, umfassend dieselben mindestens drei verschiedenen Netzwerkknoten (101, 102, 103) des physischen Rings, den das erste virtuelle Netzwerk umfasst, wobei dieselben mindestens drei verschiedenen Netzwerkknoten in Form einer zweiten Kette verbunden sind, wobei die zweite Kette zwei Endpunkte aufweist und mindestens einer der zwei Endpunkte nicht gleich den Endpunkten der ersten Kette ist;
wobei die virtuellen Netzwerke zu den Netzwerkknoten so konfiguriert sind (11, 12, 13), dass die Konfigurationen statischer Natur sind, die Konfigurationen jedoch aktualisiert werden können, wenn der Bedarf entsteht, indem in einem Netzwerkknoten, bei welchem es sich um einen Endpunkt des ersten virtuellen Netzwerks handelt, eine nächste Uplink-Abschnittsadresse oder eine nächste Downlink-Abschnittsadresse gespeichert wird, und in jedem anderen Netzwerkknoten zwischen den Endpunkten des ersten virtuellen Netzwerkknotens eine nächste Abschnittsadresse für den Uplink und eine nächste Abschnittsadresse für den Downlink in Richtung des Netzwerkknotens gespeichert wird, an dem die Kette des ersten virtuellen Netzwerks endet, und indem in einem Netzwerkknoten, bei dem es sich um einen Endpunkt des zweiten virtuellen Netzwerks handelt, eine nächste Uplink-Abschnittsadresse oder eine nächste Downlink-Abschnittsadresse gespeichert wird, und in jedem anderen Netzwerkknoten zwischen den Endpunkten des zweiten virtuellen Netzwerkknotens eine nächste Abschnittsadresse für den Uplink und eine nächste Abschnittsadresse für den Downlink in Richtung des Netzwerkknotens gespeichert wird, an dem die Kette des zweiten virtuellen Netzwerks endet;
**dadurch gekennzeichnet, dass** das
System (100) dazu konfiguriert ist, das erste virtuelle Netzwerk für die Übertragung eines Pakets und das zweite virtuelle Netzwerk für die Übertragung einer Kopie des Pakets zu nutzen, und die Netzwerkknoten (101, 102, 103) dazu konfiguriert sind, in Reaktion auf den Empfang, in einem Netzwerkknoten, eines Pakets über eines aus dem ersten virtuellen Netzwerk und dem zweiten virtuellen Netzwerk zu überprüfen, ob das Paket an den Netzwerkknoten selbst oder an eine Vorrichtung gerichtet ist, die von dem Netzwerkknoten versorgt wird, und wenn nicht, das Paket in Übereinstimmung mit der Konfiguration des entsprechenden virtuellen Netzwerks weiterzuleiten (307).

6. System (100) nach Anspruch 5, wobei die virtuellen Netzwerke einen gemeinsamen Endpunkt (101) haben.

7. System nach Anspruch 6, wobei
das System des Weiteren eine oder mehrere Vermittlungsinstanzen (202) mindestens zwischen dem gemeinsamen Endpunkt (201) und dem anderen Endpunkt (202) des zweiten virtuellen Netzwerks (202) umfasst, und
die virtuellen Netzwerke so konfiguriert sind, dass das erste virtuelle Netzwerk nicht eine oder mehrere Vermittlungsinstanzen (220) zwischen dem gemeinsamen Endpunkt (201) und dem anderen Endpunkt (202) des zweiten virtuellen Netzwerks umfasst.

8. System (100) nach Anspruch 5, 6 oder 7, wobei die virtuellen Netzwerke bidirektional sind.

9. System (100) nach Anspruch 5, 6, 7 oder 8, wobei exakt ein erstes virtuelles Netzwerk und ein zweites virtuelles Netzwerk konfiguriert sind, und beide Netzwerke die mindestens drei Netzwerkknoten (101, 102, 103) umfassen.

10. System (100) nach Anspruch 5, 6, 7, 8 oder 9, wobei einer oder mehrere der Netzwerkknoten (101, 102, 103) Mittel zum Empfangen von Daten umfassen, die in einem Paket über eine andere Schnittstelle als eine Schnittstelle für das erste oder zweite Netzwerk zu senden sind, Mittel zum Kopieren des Pakets, Mittel zum Senden des Pakets über das erste virtuelle Netzwerk und Mittel zum Senden der Kopie des Pakets über das zweite virtuelle Netzwerk; und/oder Mittel zum Durchführen eines Verfahrens nach Anspruch 1, 2, 3 oder 4.

11. Netzwerkknoten (400), umfassend:
einen Speicher (402) mit mindestens einem ersten virtuellen Netzwerk und einem zweiten virtuellen Netzwerk, die in dem Speicher so konfiguriert sind, dass die Konfigurationen der virtuellen Netzwerke statischer Natur sind, die Konfigurationen jedoch aktualisiert werden können, wenn der Bedarf entsteht, wobei das erste virtuelle Netzwerk und das zweite virtuelle Netzwerk dieselben mindestens drei verschiedene Netzwerkknoten umfassen, die ein physisches Ringnetzwerk umfasst, innerhalb dessen sich die virtuellen Netzwerke befinden, wobei die Netzwerkknoten in einem virtuellen Netzwerk in Form einer Kette mit zwei Endpunkten verbunden sind, wobei mindestens einer der zwei Endpunkte des zweiten virtuellen Netzwerks nicht gleich den Endpunkten des ersten virtuellen Netzwerks ist, wobei, wenn der Netzwerkknoten ein Endpunkt des ersten virtuellen Netzwerks ist, die Konfiguration eine nächste Uplink-Abschnittsadresse oder eine nächste Downlink-Abschnittsadresse umfasst, oder wenn sich der Netzwerkknoten zwischen den Endpunkten des ersten virtuellen Netzwerks befindet, eine nächste Abschnittsadresse für den Uplink und eine nächste Abschnittsadresse für den Downlink in Richtung des Netzwerkknotens umfasst, an dem die Kette des ersten virtuellen Netzwerks endet, und wenn der Netzwerkknoten ein Endpunkt des zweiten virtuellen Netzwerks ist, die Konfiguration eine nächste Uplink-Abschnittsadresse oder eine nächste Downlink-Abschnittsadresse umfasst, oder wenn der Netzwerkknoten sich zwischen den Endpunkten des zweiten virtuellen Netzwerks befindet, eine nächste Abschnittsadresse für den Uplink und eine nächste Abschnittsadresse für den Downlink in Richtung des Netzwerkknotens umfasst, an dem die Kette des zweiten virtuellen Netzwerks endet;
**dadurch gekennzeichnet, dass** der Netzwerkknoten (400) des Weiteren Folgendes umfasst:
Mittel zum Verwenden des ersten virtuellen Netzwerks und des zweiten virtuellen Netzwerks zur entsprechenden und im Wesentlichen gleichzeitigen Übertragung eines Pakets und einer Kopie des Pakets;
Mittel (401) zum Empfangen eines Pakets über eines aus dem ersten virtuellen Netzwerk und dem zweiten virtuellen Netzwerk und einer Kopie des Pakets über das andere aus dem ersten virtuellen Netzwerk und dem zweiten virtuellen Netzwerk;
Mittel zum Überprüfen (401), ob das Paket oder die Kopie an den Netzwerkknoten selbst oder an eine Vorrichtung gerichtet ist, die von dem Netzwerkknoten versorgt wird, und
Mittel (401) zum Weiterleiten des Pakets und der Kopie in Übereinstimmung mit der entsprechenden Konfiguration, wenn das Paket oder die Kopie nicht an den Netzwerkknoten selbst oder an eine Vorrichtung gerichtet ist, die von dem Netzwerk versorgt wird.

12. Netzwerkknoten (400) nach Anspruch 11, des Weiteren umfassend:
Mittel (401) zum Weiterleiten Pakets, das an eine Vorrichtung gerichtet ist, die von dem Netzwerkknoten versorgt wird, an die Vorrichtung.

13. Netzwerkknoten (400) nach Anspruch 11 oder 12, des Weiteren umfassend:
Mittel (401) zum Empfangen von Daten, die in einem Paket über eine andere Schnittstelle als eine Schnittstelle für das erste oder das zweite virtuelle Netzwerk zu senden sind;
Mittel (401) zum Kopieren des Pakets;
Mittel (421) zum Senden des Pakets über das erste virtuelle Netzwerk; und
Mittel (422) zum Senden der Kopie des Pakets über das zweite virtuelle Netzwerk.

14. Netzwerkknoten (400) nach Anspruch 11, 12 oder 13, des Weiteren umfassend:
Mittel (401) zum Überprüfen, in Reaktion darauf, dass ein Paket über eines aus dem ersten virtuellen Netzwerk und dem zweiten virtuellen Netzwerk empfangen wird und an einen anderen Netzwerkknoten oder eine Vorrichtung gerichtet ist, die von dem Netzwerk versorgt wird, ob eine Kopie des Pakets bereits früher über das eine aus dem ersten virtuellen Netzwerk und dem zweiten virtuellen Netzwerk empfangen wurde oder nicht; und
Mittel zum Entsorgen des empfangenen Pakets in Reaktion darauf, dass die Kopie bereits früher empfangen wurde.

15. Netzwerkknoten (400) nach Anspruch 11, 12, 13 oder 14, wobei der Netzwerkknoten (400) eine Basisstation, ein Schalter, eine digitale Vermittlungsstelle oder eine Medien-Gateway-Steuerungseinheit ist.

## Revendications

1. Procédé d'un système (100) qui comprend au moins trois noeuds de réseau (101, 102, 102) connectés les uns aux autres au moyen de liaisons physiques (PH - 1, PH - 2, PH - 3) qui forment un réseau en anneau physique, le procédé comprenant les étapes consistant à :
configurer un premier réseau virtuel qui connecte ces mêmes trois noeuds de réseau au moins du réseau en anneau physique sous la forme d'une chaîne (V1 - 1, V1 - 2) présentant deux points d'extrémité de telle sorte que la configuration du premier réseau virtuel soit statique de nature, mais que la configuration puisse être mise à jour si besoin, en stockant dans un noeud de réseau qui est un point d'extrémité du premier réseau virtuel, une adresse de saut suivant de liaison montante, ou une adresse de saut suivant de liaison descendante, et dans chaque autre noeud de réseau situé entre les points d'extrémité, une adresse de saut suivant de liaison montante, et une adresse de saut suivant de liaison descendante vers le noeud de réseau où la chaîne se termine ; et
configurer un deuxième réseau virtuel qui connecte ces mêmes trois noeuds de réseau au moins de l'anneau physique que le premier réseau virtuel connecte sous la forme d'une chaîne (V2 - 1, V2 - 2) présentant deux points d'extrémité au moins dont l'un n'est pas commun avec les points d'extrémité du premier réseau virtuel, de sorte que la configuration du deuxième réseau virtuel soit statique de nature, mais que la configuration puisse être mise à jour si besoin, en stockant dans un noeud de réseau qui est un point d'extrémité du deuxième réseau virtuel une adresse de saut suivant de liaison montante, ou une adresse de saut suivant de liaison descendante, et dans chaque autre noeud de réseau entre les points d'extrémité, une adresse de saut suivant de liaison montante, et une adresse de saut suivant de liaison descendante vers le noeud de réseau où la chaîne se termine ;
**caractérisé par** une étape consistant à :
utiliser le premier réseau virtuel et le deuxième réseau virtuel pour transmettre de manière correspondante et sensiblement simultanée un paquet et une copie du paquet ;
le procédé comprenant en outre les étapes consistant à :
recevoir (301), dans un noeud de réseau, un paquet sur l'un du premier réseau virtuel et du deuxième réseau virtuel ;
vérifier (305, 306), si le paquet est destiné au noeud de réseau lui-même ou à un appareil pris en charge par le noeud de réseau ; et
si tel n'est pas le cas, faire suivre (307) le paquet selon la configuration du réseau virtuel correspondant.

2. Procédé selon la revendication 1, comprenant en outre une étape consistant à configurer le premier réseau virtuel et le deuxième réseau virtuel de façon à ce qu'ils présentent un point d'extrémité commun (101).

3. Procédé selon la revendication 1 ou la revendication 2, le procédé comprenant en outre les étapes consistant à :
recevoir (301) des données à envoyer dans un paquet sur une interface différente d'une interface du premier ou du deuxième réseau virtuel ;
copier (303) le paquet ;
envoyer (304) le paquet sur le premier réseau virtuel ; et
envoyer (304) la copie du paquet sur le deuxième réseau virtuel.

4. Procédé selon la revendication 1 ou la revendication 2, le procédé comprenant en outre les étapes consistant, quand un paquet est reçu sur l'un du premier réseau virtuel et du deuxième réseau, et est destiné à l'appareil :
à vérifier (308) si le même paquet a été précédemment reçu ou non sur l'autre du premier réseau virtuel et du deuxième réseau virtuel ; et
si le même paquet a été reçu précédemment, rejeter (309) le paquet reçu ;
si tel n'est pas le cas, faire suivre (310) le paquet à l'appareil.

5. Système (100) comprenant :
au moins trois noeuds de réseau (101, 102, 103) connectés les uns aux autres au moyen d'un réseau en anneau physique qui comprend des liaisons physiques ;
un premier réseau virtuel qui comprend ces mêmes trois noeuds de réseau différents (101, 102, 103) au moins du réseau en anneau physique connectés dans le premier réseau virtuel sous la forme d'une première chaîne présentant deux points d'extrémité ; et
un deuxième réseau virtuel qui comprend les mêmes trois noeuds de réseau différents (101, 102, 103) au moins de l'anneau physique que le premier réseau virtuel, ces mêmes trois noeuds de réseau différents au moins étant connectés sous la forme d'une deuxième chaîne, la deuxième chaîne présentant deux points d'extrémité, dont l'un au moins des deux points d'extrémité n'est pas commun avec les points d'extrémité de la première chaîne ;
dans lequel les réseaux virtuels sont configurés (11, 12, 13) de façon à utiliser les noeuds de réseau de telle sorte que les configurations soient statiques de nature, mais qu'elles puissent être mises à jour si besoin est, en stockant dans un noeud de réseau qui est un point d'extrémité du premier réseau virtuel une adresse de saut suivant de liaison montante, ou une adresse de saut suivant de liaison descendante, et à chaque autre noeud de réseau situé entre les points d'extrémité du premier noeud de réseau virtuel une adresse de saut suivant de liaison montante et une adresse de saut suivant de liaison descendante vers le noeud de réseau où la chaîne du premier réseau virtuel se termine, et en stockant dans un noeud de réseau qui est un point d'extrémité du deuxième réseau virtuel une adresse de saut suivant de liaison montante, ou une adresse de saut suivant de liaison descendante, et dans chaque autre noeud de réseau situé entre les points d'extrémité du deuxième noeud de réseau virtuel une adresse de saut suivant de liaison montante et une adresse de saut suivant de liaison descendante vers le noeud de réseau où la chaîne du deuxième réseau virtuel se termine ;
**caractérisé en ce que** :
le système (100) est configuré de façon à utiliser le premier réseau virtuel pour transmettre un paquet, et le deuxième réseau virtuel pour transmettre une copie du paquet, et les noeuds de réseau (101, 102, 103) sont configurés de façon à vérifier, en réponse à la réception dans un noeud de réseau d'un paquet sur l'un du premier réseau virtuel et du deuxième réseau virtuel, si le paquet est destiné au noeud de réseau lui-même ou à un appareil pris en charge par le noeud de réseau, et si tel n'est pas le cas, à faire suivre (307) le paquet selon la configuration du réseau virtuel correspondant.

6. Système (100) selon la revendication 5, dans lequel les réseaux virtuels présentent un point d'extrémité commun (101).

7. Système selon la revendication 6, dans lequel :
le système comprend en outre une ou plusieurs entités de relais (220) au moins situés entre le point d'extrémité commun (201) et l'autre point d'extrémité (202) du deuxième réseau virtuel (202) ; et
les réseaux virtuels sont configurés de telle sorte que le premier réseau virtuel ne comprenne pas une ou plusieurs entités de relais (220) située entre le point d'extrémité commun (201) et l'autre point d'extrémité (202) du deuxième réseau virtuel.

8. Système (100) selon l'une quelconque des revendications 5 à 7, dans lequel les réseaux virtuels sont bidirectionnels.

9. Système (100) selon l'une quelconque des revendications 5 à 8, dans lequel exactement un premier réseau virtuel et un deuxième réseau virtuel, sont configurés, les deux réseaux virtuels comprenant les trois noeuds de réseau (101, 102, 103) au moins.

10. Système (100) selon l'une quelconque des revendications 5 à 9, où un ou plusieurs des noeuds de réseau (101, 102, 103) comprennent des moyens destinés à recevoir des données à envoyer dans un paquet sur une interface différente d'une interface du premier ou du deuxième réseau virtuel, des moyens destinés à copier le paquet, des moyens destinés à envoyer le paquet sur le premier réseau virtuel, et des moyens destinés à envoyer la copie du paquet sur le deuxième réseau virtuel, et / ou des moyens destinés à exécuter un procédé selon l'une quelconque des revendications 1 à 4.

11. Noeud de réseau (400) comprenant :
une mémoire (402) qui possède au moins un premier réseau virtuel et un deuxième réseau virtuel configurés dans la mémoire de telle sorte que les configurations des réseaux virtuels soient statiques de nature, mais que les configurations puissent être mises à jour si besoin est, le premier réseau virtuel et le deuxième réseau virtuel comprenant au moins les mêmes trois noeuds de réseau différents d'un réseau en anneau physique, à l'intérieur duquel se trouvent les réseaux virtuels, les noeuds de réseau étant connectés dans un réseau virtuel sous la forme d'une chaîne présentant deux points d'extrémité, dans lequel l'un au moins des deux points d'extrémité du deuxième réseau virtuel n'est pas commun avec les points d'extrémité du premier réseau virtuel, dans lequel, si le noeud de réseau est un point d'extrémité du premier réseau virtuel, la configuration comprend une adresse de saut suivant de liaison montante ou une adresse de saut suivant de liaison descendante, ou si le noeud de réseau se situe entre les points d'extrémité du premier réseau virtuel, une adresse de saut suivant de liaison montante et une adresse de saut suivant de liaison descendante vers le noeud de réseau où la chaîne du premier réseau virtuel se termine, et si le noeud de réseau est un point d'extrémité du deuxième réseau virtuel, la configuration comprend une adresse de saut suivant de liaison montante ou une adresse de saut suivant de liaison descendante, ou si le noeud de réseau se situe entre les points d'extrémité du deuxième réseau virtuel, une adresse de saut suivant de liaison montante et une adresse de saut suivant de liaison descendante vers le noeud de réseau où la chaîne du deuxième réseau virtuel se termine ;
**caractérisé en ce que** le noeud de réseau (400) comprend en outre :
des moyens destinés à utiliser le premier réseau virtuel et le deuxième réseau virtuel pour transmettre de manière correspondante et sensiblement simultanée un paquet et une copie du paquet ;
des moyens (401) destinés à recevoir un paquet sur l'un du premier réseau virtuel et du deuxième réseau virtuel, et une copie du paquet sur l'autre du premier réseau virtuel et du deuxième réseau virtuel ;
des moyens (401) destinés à vérifier, si le paquet ou la copie est destiné au noeud de réseau lui-même ou à un appareil pris en charge par le noeud de réseau ; et
des moyens (401) destinés à faire suivre le paquet et la copie selon la configuration correspondante, si le paquet ou la copie n'est pas destiné au noeud de réseau lui-même ou à un appareil pris en charge par le réseau.

12. Noeud de réseau (400) selon la revendication 11, comprenant en outre :
des moyens (401) destinés à faire suivre un paquet destiné à un appareil pris en charge par le noeud de réseau.

13. Noeud de réseau (400) selon la revendication 11 ou la revendication 12, comprenant en outre :
des moyens (401) destinés à recevoir des données à envoyer dans un paquet sur une interface différente d'une interface du premier ou du deuxième réseau virtuel ;
des moyens (401) destinés à copier le paquet ;
des moyens (421) destinés à envoyer le paquet sur le premier réseau virtuel ; et
des moyens (422) destinés à envoyer la copie du paquet sur le deuxième réseau virtuel.

14. Noeud de réseau (400) selon l'une quelconque des revendications 11 à 13, comprenant en outre :
des moyens (401) destiné à vérifier, en réponse à la réception d'un paquet sur le premier réseau virtuel et sur le deuxième réseau et destiné à autre un noeud de réseau ou à un appareil pris en charge par le noeud de réseau, si une copie du paquet a été précédemment reçue sur l'autre du premier réseau virtuel et du deuxième réseau virtuel ; et
des moyens destinés à rejeter le paquet reçu en réponse à une copie reçue précédemment.

15. Noeud de réseau (400) selon l'une quelconque des revendications 11 à 14, dans lequel le noeud de réseau (400) est une station de base, un commutateur, un central téléphonique numérique ou un contrôleur de passerelle multimédia.
